# EUROPÄISCHE PATENTSCHRIFT

(11) **EP 0 711 615 B1**
(45) Veröffentlichungstag und Bekanntmachung des Hinweises auf die Patenterteilung: **19.12.2001**
(21) Anmeldenummer: 95117124.8
(22) Anmeldetag: 31.10.1995
(51) Int. Cl.: B22C 9/06

(54) **Dauerform für Metall-, Kunststoff- und Glasguss**
Permanent mould for metal-, plastic- and glass casting
Moule permanent pour la coulée des métaux des matières en plastique et des verres

(30) Priorität: 09.11.1994 DE 4439984; 19.07.1995 DE 19526377
(43) Veröffentlichungstag der Anmeldung: 15.05.1996
(73) Patentinhaber: Betz, Gerhard, Dr., 45478 Mülheim/Ruhr (DE)
(72) Erfinder: Betz, Gerhard, Dr., 45478 Mülheim/Ruhr (DE)
(74) Vertreter: Schmidt, Frank-Michael, Dr.-Ing.

(56) Entgegenhaltungen:
- EP-A- 0 423 390
- DE-A- 3 120 582
- DE-A- 4 212 787
- US-A- 4 683 781
- US-A- 5 230 380

## Beschreibung

Die Erfindung betrifft eine Dauerform für Metall-, Kunststoff- und Glasguß sowie ein Verfahren zu deren Herstellung.

Dauerformen aus Warmarbeitsstahl oder Gußeisen sind mit Blick auf ihre Wärmeleistung wegen der niedrigen Wärmeleitfähigkeit der verwendeten Werkstoffe in ihrer Leistungsfähigkeit begrenzt. Eine Herstellung herkömmlicher Dauerformen aus einem Formwerkstoff mit hoher Wärmeleitfähigkeit, wie beispielsweise Kupfer, ist nicht möglich, da in einer solchen Gießform die Schmelzeflüssigkeit beim Eingießen oder Einspritzen schroff abkühlen und auf dem Wege der Formfüllung erstarren würde. Auch würde Kupfer oder eine Kupferlegierung der hohen Thermoschockbeanspruchung, Erosion, Kavitation und dem Abrieb nicht so gut widerstehen wie ein Warmarbeitsstahl.

Zur weiteren Erhöhung der Wärmeleistung der aus Stahl gefertigten Gießformen werden in die Rückwand Kühlkanäle eingearbeitet. Die großen Mindestabstände der Kühlkanäle zur Formkontur und auch untereinander führen in Verbindung mit der geringen Wärmeleitfähigkeit des Gußformmaterials zu einer sehr inhomogenen Temperaturverteilung in der massiven Form. Deshalb können auch durch aufwendige Kühlsysteme heiße Zonen und örtlich sehr unterschiedliche Erstarrungszeiten des Gußstücks nicht ganz vermieden werden.

Ein weiterer Nachteil von Stahlformen liegt in der Trägheit der Form beim Vorwärmen und Anfahren zu Gießbeginn und beim Abkühlen im Falle einer störungsbedingten Unterbrechung oder nach Ende der Gießserie.

Neben der aktiven Kühlung über die in die Form rückwärtig eingearbeiteten Kühlkanäle ist es für den Metall-Druckguß gängige Praxis, die heiße Formoberfläche nach dem Öffnen der Form und der Gußteilentnahme mit Sprüh- oder Spritzwasser abzukühlen. Diese schroffe Abkühlung der etwa 350-450°C heißen Formoberfläche bis auf unter 100 °C erzeugt im oberflächennahen Bereich Zug- und Druckspannungen, die zu einer netzwerkartigen Rißschädigung (Ermüdungsrisse, Heißrisse) der Formoberfläche führen.

Beim Kunststoff-Spritzgießen wie auch beim Spritzpressen, -Formpressen und -Blasformen hängt die Werkstoffstruktur der gefertigten Kunststoffbauteile in erheblichem Maße von der Temperaturführung in der Form ab. Außerdem muß eine möglichst homogene Temperaturverteilung gewährleistet werden, was mit einer massiven Stahlform trotz aufwendiger Kühltechniken nur bedingt möglich ist.

Eine ähnliche Problematik gibt es auch bei der Glasherstellung, da Glas wie Kunststoff im Gegensatz zu Metallen eine sehr niedrige Wärmeleitfähigkeit besitzt.

In dem Bemühen um eine Verbesserung der Kühlleistung von Stahlformen und eine Vermeidung von "hot spots" versuchen bisherige Ansätze, durch örtlich begrenzte Einlagerung oder Einbringung gut wärmeleitender Materialien oder wärmetransportierender Systeme die Situation zu verbessern. Nach Metalltechnik Fachbildung "Der Werkzeugbau", Verlag Europa Lehrmittel, Europa Nr. 10889, 10 Aufl., 1991, wird vorgeschlagen, Kühlkanäle mit rechteckigen Querschnittsformen zu verwenden.

In The Diecasting Book (A.C. Street), Portcullis Press LTD, Ridhill, Surrey, England, 1986, werden Wärmerohre empfohlen, um schwer zugängliche Stellen zu kühlen.

Nach DE 4 212 787 A1 sollen gut wärmeleitende Stifte, Röhrchen oder Mantelelemente in die Stahlform möglichst dicht unter der inneren Oberfläche eingebettet werden, wobei dann die Wärme über die Anbindung an eine dahinter liegende Aktivkühlung (Wasserkühlung) beschleunigt abgeführt werden soll.

Aus US-A-5 230 380 ist eine Stranggußform aus Kupfer oder einer Kupferlegierung bekannt, die an ihrer Innenseite eine Schutzbeschichtung aus einem mechanisch beständigerem Werkstoff aufweist. Die Schutzschicht kann unterschiedliche Dicken aufweisen, wobei in Bereichen stärkerer mechanischer Beanspruchung eine dickere Schutzschicht ausgebildet ist.

Aus DE-A-31 20 582 ist eine Kokille zur Aufnahme flüssigen Aluminiums oder von Aluminiumlegierungen bekannt, deren innere Oberfläche mit einer dünnen Schutzschicht aus submikronen Metalloxid-Partikeln überzogen ist. Diese durch Aufsprühen aufgebrachte Metalloxidschicht dient als Schutzschicht zur Verringerung des Wärmeübergangs von der Schmelze in die Kokille vorrangig in dem kurzen Zeitintervall unmittelbar nach Eingießen der Schmelze, in der die Temperaturdifferenzen zwischen der Schmelze und der Kokille am größten sind. Die Schutzschicht hemmt den Wärmetransport und verringert die Gefahr der durch zu starken Wärmeentzug im Außenbereich der Schmelze möglichen Kaltlaufbildung und der durch zu starke Wärmezufuhr auf der inneren Formoberfläche möglichen Brandrißbildung (vergl. Seite 3, 2. Absatz). Allerdings ermöglicht diese Schutzschicht keine über den gesamten Erstarrungsprozeß kontrollierte und gußteilabhängig örtlich variierende Wärmeabfuhr.

Der vorliegenden Erfindung liegt die Aufgabe zugrunde, eine Dauerform mit höherer Wärmeleistung zu schaffen, bei der örtlich unterschiedliche Wärmestromdichten einstellbar sind.

Erfindungsgemäß wird die Aufgabe durch eine Dauerform mit den Merkmalen des Anspruchs 1 und ein Verfahren zur Herstellung einer Dauerform mit den Merkmalen des Anspruchs 7 gelöst.

Die Erfindung gibt das bei sämtlichen bisherigen Lösungsansätzen beibehaltene "Prinzip der Stahlform" auf, da auch mit modifizierten Stahlformen (mit eingebrachten komplizierten Kühlsystemen) aufgrund der erforderlichen Beabstandung der Kühlsysteme von der Gußteiloberfläche nicht die gewünschte Wärmeleistung erreicht werden kann. In prinzipieller Abkehr von bisherigen Ansätzen wählt die erfindungsgemäße Lösung als Grundwerkstoff der Dauerform ein Material mit hoher Wärmeleitfähigkeit, vorteilhafterweise einen Kupferwerkstoff. Um die mit einem solchen Material verbundenen Nachteile zu beseitigen, wird die Dauerform aus gut wärmeleitfähigem Material modifiziert, indem ein Werkstoffverbund, bestehend aus einem Grundwerkstoff und einem an der inneren, formgebenden Oberfläche vorgesehenen Oberflächenwerkstoff eingesetzt wird. Die Oberflächenschicht besteht aus einem Material deutlich geringerer Wärmeleitfähigkeit, jedoch hoher Thermoschock- und Abriebbeständigkeit. Zwischen Grundwerkstoff und Schichtwerkstoff besteht eine dauerfeste, metallische Bindung.

Die Oberflächenschicht ist in ihrer Dicke so bemessen, daß durch sie ein Wärmestrom mit einer bestimmten Dichte hindurchtritt, was dadurch möglich ist, daß die Wärmestromdichte proportional dem in der Schicht sich einstellenden Temperaturgradienten ist und letzterer sich umgekehrt proportional zur Schichtdicke verhält. Mit diesen selektiv eingestellten Wärmestromdichten kann erreicht werden, daß ein Gußteil in allen Zonen der Form nahezu zeitgleich erstarrt und abkühlt oder aber eine bestimmte, zum Zwecke der Dichtspeisung des Gefüges erforderliche Erstarrungslenkung gewährleistet wird.

Ein Vorteil der erfindungsgemäßen Form besteht darin, daß durch die höhere Wärmeleistung eine raschere Gießfolge (kurzer Zyklus) und damit eine höhere Produktivität und Wirtschaftlichkeit erreicht wird. Desweiteren ermöglicht die selektive Wärmestromlenkung in Verbindung mit der insgesamt deutlich höheren Wärmeleitung einen teilweisen oder völligen Verzicht auf eine Sprüh- und Spritzwasserkühlung der Formoberfläche, was eine weitere Gießzyklus-Verkürzung erbringt, aber vor allem die Lebensdauer der Gießform erheblich verlängert. Schließlich eröffnet die Justierbarkeit der örtlich unterschiedlichen Wärmestromdichten erstmals die Möglichkeit, ein homogenes Temperaturfeld, d.h. eine isotherme Formoberfläche zu erreichen, was für die innere Beschaffenheit der Gußteile als auch für die Maßgenauigkeit von großer Bedeutung ist.

Mit der vorliegenden Erfindung wird auch ein wesentlicher Beitrag zur Befähigung des Gieß- bzw. Spritzprozesses im Sinne einer beherrschten, reproduzierbaren Fertigung möglich.

Eine vorteilhafte Weiterbildung der Dauerform ist dadurch gekennzeichnet, daß zwischen dem ersten Material der Dauerform und der Schicht aus dem zweiten Material zumindest teilweise eine dünne Zwischenschicht aus einem dritten Material eingebracht ist, wobei das dritte Material bei der Temperatur eines Hochtemperatur-Hochdruck-Metalldiffusionsvorganges sowohl mit dem ersten als auch mit dem zweiten Material jeweils einen Mischkristall bildet. Vorteilhafterweise ist die Löslichkeit des ersten Materials im Kristall des dritten Materials größer als die direkte Löslichkeit des ersten Materials im Kristall des zweiten Materials und die Löslichkeit des zweiten Materials im Kristall des dritten Materials größer als die direkte Löslichkeit des zweiten Materials im ersten Material. Diese Einbringung des dritten Materials sichert eine dauerhafte, feste Verbindung, auch wenn das erste und das zweite Material zusammen keinen oder keinen lückenlosen Mischkristall bilden.

Bei einer ersten bevorzugten Ausführungsform werden die Legierungszusammensetzungen und die Behandlungstemperatur T so aufeinander abgestimmt, daß alle Vorgänge als Festkörperdiffusionen und Festkörperreaktionen im festen Aggregatzustand ablaufen. Eine zweite Ausführungsform sieht vor, daß der dritte Werkstoff durch eine spezielle chemische Zusammensetzung oder durch Dotierung mit einem vierten Werkstoff und durch die darauf abgestimmte Behandlungstemperatur im Kontakt mit einem der Körperwerkstoffe oder mit beiden Körperwerkstoffen im ersten Zeitabschnitt einer Hochtemperatur-Hochdruck-Verbindungsherstellung kurzzeitig in der Verbindungszone eine Dünnfilmaufschmelzung verursacht, die jedoch durch die fortschreitende Diffusion wieder erstarrt, ohne daß dabei die Temperatur T abgesenkt wird. Durch die zweite AusführungsVariante kann zur Erzielung einer hohen Verbindungsfestigkeit ein lokales Flüssig-Verschweißen von Körpern erreicht werden, ohne daß ein tieferschmelzendes Phasengemisch in der Grenzschicht des Werkstoffverbundes verbleibt, so daß der Werkstoffverbund eine spätere Wiedererwärmung auf die Behandlungstemperatur T oder sogar darüber zur Durchführung einer Warmformung, Härtung oder andere Behandlungen zuläßt.

Bei dem erfindungsgemäßen Herstellungsverfahren wird die zwischen dem Material des Grundkörpers und dem Material der dem Gußteil zugewandten Schicht erforderliche dauerfeste metallische Verbindung durch einen Hochtemperatur-Hochdruck-Metalldiffusionsvorgang hergestellt. Dabei wird die gute metallische Bindungsfähigkeit erreicht, wenn die Diffusionsbehandlung bei Temperaturen zwischen 850 und 1.200 °C und bei Drücken zwischen 250 und 2.500 bar durchgeführt wird, die thermischen Ausdehnungskoeffizienten Schicht/Grundwerkstoff im Verhältnis zwischen 1:1 und 1:2,5 und die Schmelzpunkte oberhalb von 900 °C liegen.

Vorteilhafte Weiterbildungen der Erfindung sind in den Unteransprüchen gekennzeichnet.

Im folgenden wird die Erfindung anhand von in der Zeichnung dargestellten Ausführungsbeispielen näher erläutert. In der Zeichnung zeigen:
- Fig. 1: einen Schnitt durch eine Hälfte einer Dauerform mit einem innenliegenden Gußteil;
- Fig. 2: einen Schnitt durch eine Hälfte eines Rohlings bei der Herstellung einer Dauerform; und
- Fig. 3: einen Schnitt durch eine Hälfte eines Dauerform-Rohlings bei einer Herstellung des Grundkörpers auf pulvermetallurgischem Wege.

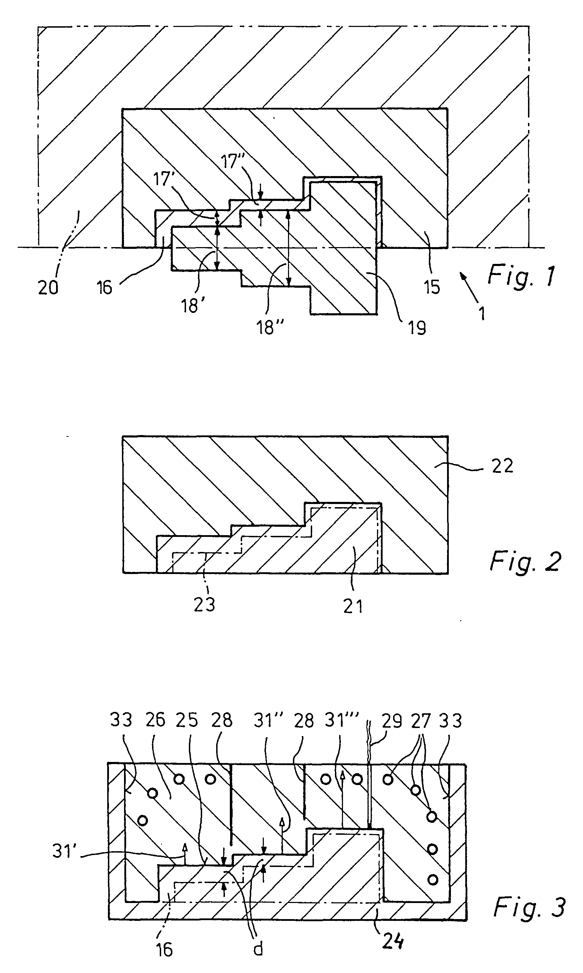

Fig. 1 zeigt einen Ausschnitt aus einer Dauerform 1 mit einem Grundkörper 15 aus einem Grundwerkstoff hoher Wärmeleitfähigkeit und einer auf der inneren, formgebenden Oberfläche aufgebrachten Schicht 16 geringerer Wärmeleitfähigkeit. Die Schichtdicken 17, und 17" werden im Normalfall im umgekehrten Verhältnis zur örtlichen Gußteilwanddicke 18', 18" festgelegt, so daß das Gußteil 19 möglichst zeitgleich an allen Stellen durcherstarrt. Die Schichtdicke 17 kann auch in Abhängigkeit von anderen Vorgaben zur Erstarrungslenkung festgelegt sein.

Die Form 1 ist in einen Formrahmen aus Stahl 20 eingesetzt und weist im vom Gußteil entfernten Bereich in der Regel eine Aktivkühlung (Kühlrohrsystem) auf.

Anhand der Fig. 2 und 3 werden zwei mögliche Herstellungstechniken näher erläutert. Bei der Herstellung gemäß Fig. 2 wird auf einen konturierten Körper 21 aus dem Schichtwerkstoff, vorteilhafterweise einem Warmarbeitsstahl, ein als Gegenstück entsprechend passend gearbeiteter Körper aus dem Grundwerkstoff 22, vorteilhafterweise einem Kupferwerkstoff, aufgesetzt. Nach der vorzugsweise durch Hochtemperatur-Hochdruck-Metalldiffusion hergestellten Verbindung wird der Schichtkörper bis auf die dem Gußteil zugewandte Endkontur 23 abgetragen, so daß man die Form aus Kupfer mit der Oberflächenschicht aus Warmarbeitsstahl in den gewünschten Schichtdicken erhält.

Bei dem Herstellungsverfahren gemäß Fig. 3 wird zunächst aus einem Schichtmaterial-Block 24 ein innerer Hohlraum herausgearbeitet, dessen Konturflächen (25, 33) der in Fig. 3 unten dargestellten Fläche 25 der späteren Verbindungsfläche Grundwerkstoff/Oberflächenschicht entspricht. Dieser "Behälter" aus dem Schichtwerkstoff wird anschließend mit Metallpulver 26 des Grundwerkstoffs aufgefüllt, wobei gegebenenfalls zuvor noch ein Kühlrohrsystem 27 und/oder Wärmestrombarrieren 28 und/oder Thermoelemente 29 im Behälter angeordnet werden können. Nach Kapselung wird die pulvermetallurgische Verdichtung und Verschweißung vorteilhafterweise gleichzeitig mit der Herstellung der metallischen Bindung zwischen Schichtmetall und Grundkörper-Metall durchgeführt. Danach wird der Schichtkörper bis auf die Endkontur abgetragen, so daß eine Form mit der Oberflächenschicht in den gewünschten Dicken entsteht.

Anhand von Fig. 3 wird im folgenden das erfindungsgemäße Prinzip der selektiven Wärmestromdichte-Steuerung erläutert. Durch die vorgegebene Schichtdicke d wird bei einem vorgegebenen Temperaturgefälle ΔT durch den sich daraus ergebenden Temperaturgradienten ΔT/d eine Wärmestromdichte 31 eingestellt. Mit abnehmender Dicke d erhöht sich die Wärmestromdichte, mit zunehmender Dicke d verringert sie sich jeweils proportional zu Dicke. Deshalb wählt man im Bereich hoher Gußteilwanddicken eine dünne Schicht und im Bereich geringer Gußteilwanddicken eine dicke Schicht. Sind große Gußteilwanddickenunterschiede eng benachbart, kann es vorteilhaft sein, den Wärmequerstrom zu unterbinden. Hierzu werden Wärmeleitungsbarrieren 28 in den Grundwerkstoff eingebettet. Diese erstrecken sich im wesentlichen senkrecht von der auf der Gußteiloberfläche aufliegenden Schicht 16 nach außen. In diesem Falle können in jedem dieser durch Wärmeleitungsbarrieren abgeteilten Bereiche separate Kühlrohrsysteme 27 vorgesehen werden. Damit kann der Wärmestrom zusätzlich über eine Veränderung des Temperaturgefälles im massiven Grundwerkstoff festgelegt werden, indem der Abstand zwischen Kühlung und Grenzfläche Schicht/Grundwerkstoff verändert wird. Auch kann ein zeitlich innerhalb eines Gießzyklus veränderlicher Wärmeentzug erreicht werden, z.B. im Sinne einer Schwellkühlung.

Die Erfindung kann überall da eingesetzt werden, wo thermische Systeme einerseits einen hohen und konturgenauen Wärmeentzug erfordern, andererseits aber das Formenmaterial hoher Wärmeleitfähigkeit mit dem herzustellenden Bauteil nicht in direkte Berührung kommen soll. Beispiele sind Gießformen und deren Eingießsysteme für Metalle, Kunststoffe und Glas in den Herstellungsverfahren Druckgießen, Kokillengießen, Kunststoffgießen und Spritzblasformen und Gießformen (Kokillen) für das Stranggießen.

## Patentansprüche

1. Dauerform (1) für Metall-, Kunststoff- und Glasguß,
wobei zumindest ein Teil (15) der Dauerform im wesentlichen aus einem ersten Material mit hoher Wärmeleitfähigkeit besteht und
wobei dieser Teil (15) der Dauerform (1) an der inneren, formgebenden Oberfläche eine Schicht (16) aus einem zweiten Material mit geringerer Wärmeleitfähigkeit und hoher Thermoschock- und Abriebbeständigkeit aufweist, wobei das Verhältnis der Wärmeleitfähigkeiten zwischen 5:1 und 15:1 liegt und die Dicke (d, 17', 17'') der Schicht (16) des zweiten Materials in Abhängigkeit von örtlich verschiedenen gewünschten Wärmestromdichten eingestellt ist.

2. Dauerform nach Anspruch 1, **dadurch gekennzeichnet, daß** zwischen dem ersten Material der Dauerform (1) und der Schicht (16) aus dem zweiten Material zumindest teilweise eine dünne Zwischenschicht eines dritten Materials eingebracht ist, wobei das dritte Material bei der Temperatur eines Hochtemperatur-Hochdruck-Metalldiffusionsvorganges sowohl mit dem ersten Material als auch mit dem zweiten Material jeweils einen Mischkristall bildet.

3. Dauerform nach Anspruch 2, **dadurch gekennzeichnet, daß** die Löslichkeit des ersten Materials im Kristall des dritten Materials größer als die direkte Löslichkeit des ersten Materials im Kristall des zweiten Materials und die Löslichkeit des zweiten Materials im Kristall des dritten Materials größer als die direkte Löslichkeit des zweiten Materials im ersten Material ist.

4. Dauerform nach einem der Ansprüche 1 bis 3, **dadurch gekennzeichnet, daß** das erste und das zweite Material metallische Werkstoffe sind, deren Schmelzpunkte oberhalb von 900°C liegen,
daß das Verhältnis des thermischen Längenausdehnungskoeffizienten des ersten Materials zu dem des zweiten Materials zwischen 1:1 und 2,5:1 liegt und
daß zwischen den beiden Materialien eine durch einen Hochtemperatur-Hochdruck-Metalldiffusionsvorgang hergestellte dauerfeste metallische Verbindung besteht.

5. Dauerform nach einem der Ansprüche 1 bis 4, **dadurch gekennzeichnet, daß** das erste Material Kupfer oder ein legierter Kupferwerkstoff mit Legierungszusätzen von bis zu maximal 8% und das zweite Material ein Warmarbeitsstahl ist.

6. Dauerform nach einem der Ansprüche 1 bis 5, **dadurch gekennzeichnet, daß** innerhalb des ersten Materials ein Rohrsystem (27) für einen Kühl- und Heizkreislauf angeordnet ist.

7. Verfahren zum Herstellen einer Dauerform für Metall-, Kunststoff- und Glasguß, wobei
ein Grundkörper aus einem ersten Material mit hoher Wärmeleitfähigkeit hergestellt wird,
auf den formgebenden Innenflächen des Grundkörpers eine Schicht aus einem zweiten Material mit geringerer Wärmeleitfähigkeit und hoher Thermoschock- und Abriebbeständigkeit aufgebracht wird, wobei das Verhältnis der Wärmeleitfähigkeiten zwischen etwa 5:1 und 15:1 liegt, und
zwischen den beiden Materialien eine dauerfeste metallische Verbindung durch einen Hochtemperatur-Hochdruck-Metalldiffusionsvorgang hergestellt wird, bei dem die Temperatur zwischen 850°C und 1200°C und der Druck zwischen 250 bar und 2500 bar eingestellt wird.

8. Verfahren zum Herstellen einer Dauerform nach Anspruch 7, **dadurch gekennzeichnet, daß** vor dem Aufbringen der Schicht aus dem zweiten Material eine dünne Schicht aus einem dritten Material zwischen dem ersten und dem zweiten Material angeordnet wird, wobei das dritte Material bei der Temperatur des Hochtemperatur-Hochdruck-Metalldiffusionsvorganges mit dem ersten Material und dem zweiten Material jeweils einen gemeinsamen Mischkristall bildet, wobei die Löslichkeit des ersten Materials im Kristall des dritten Materials größer als die direkte Löslichkeit des ersten Materials im Kristall des zweiten Materials und die Löslichkeit des zweiten Materials im Kristall des dritten Materials größer als die direkte Löslichkeit des zweiten Materials im ersten Material ist.

9. Verfahren zum Herstellen einer Dauerform nach Anspruch 7 oder 8, **dadurch gekennzeichnet,**
**daß** ein Innenkörper aus dem zweiten Material hergestellt wird, dessen Außenkonturen zu den Innenkonturen eines aus dem ersten Material gefertigten Außenkörpers genau passen,
**daß** der aus dem ersten Material gefertigte Außenkörper auf den aus dem zweiten Material gefertigten Innenkörper aufgesteckt wird,
**daß** der Verbund aus Außen- und Innenkörper gekapselt und der Hochtemperatur-Hochdruck-Metalldiffusion zugeführt wird und
**daß** aus dem Innenkörper die endgültige Formkontur herausgearbeitet wird.

10. Verfahren zum Herstellen einer Dauerform nach einem der Ansprüche 7 oder 8, **dadurch gekennzeichnet,**
**daß** ein Hohlkörper aus dem zweiten Material gefertigt wird,
**daß** der Hohlkörper mit Metallpulver des ersten Materials gefüllt wird,
**daß** im Inneren des Hohlkörpers bei Bedarf ein Kühlrohrsystem angeordnet wird und
**daß** der gefüllte Hohlkörper der Hochtemperatur-Hochdruck-Metalldiffusion zugeführt wird.

## Claims

1. Permanent mould (1) for moulding metal, plastic and glass, wherein at least a portion (15) of the permanent mould substantially consists of a first material with high thermal conductivity and wherein this portion (15) of the permanent mould (1) has, on the inner moulding surface, a layer (16) of a second material with lower thermal conductivity and high resistance to thermal shock and abrasion, whereby the ratio of the thermal conductivities is between 5:1 and 50:1 and the thickness (d,17',17") of the layer (16) of the second material is set in dependence on locally different desired heat flow densities.

2. Permanent mould as claimed in claim 1, **characterised in that** positioned between the first material of the permanent mould (1) and the layer (16) of the second material there is at least in part a thin intermediate layer of a third material, whereby the third material forms a crystalline solid solution both with the first material and with the second material at the temperature of a high temperature-high pressure metal diffusion process.

3. Permanent mould as claimed in claim 2, **characterised in that** the solubility of the first material in the crystal of the third material is greater than the direct solubility of the first material in the crystal of the second material and the solubility of the second material in the crystal of the third material is greater than the direct solubility of the second material in the first material.

4. Permanent mould as claimed in one of claims 1 to 3, **characterised in that** the first and second materials are metallic materials, the melting points of which are above 900°C, that the ratio of the coefficient of thermal expansion of the first material to that of the second material is between 1:1 and 2.5:1 and that there is a permanent metallic connection produced between the two materials by a high temperature-high pressure metal diffusion process.

5. Permanent mould as claimed in one of claims 1 to 4, **characterised in that** the first material is copper or an alloyed copper material with alloying additives of up to at most 8% and the second material is a hot worked steel.

6. Permanent mould as claimed in one of claims 1 to 5, **characterised in that** a pipe system (27) is arranged within the first material for a cooling and heating circuit.

7. Method of manufacturing a permanent mould for moulding metal, plastic and glass, wherein a base body is produced from a first material with high thermal conductivity, a layer of a second material with lower thermal conductivity and high resistance to thermal shock and abrasion resistance is applied to the inner moulding surface of the base body, the ratio of the thermal conductivities being between 5:1 and 15:1, and a permanent metallic connection is produced between the two materials by a high temperature-high pressure metal diffusion process in which the temperature is set to between 850°C and 1200°C and the pressure is set to between 250 bar and 2500 bar.

8. Method of manufacturing a permanent mould as claimed in claim 7, **characterised in that** before the application of the layer of the second material, a thin layer of a third material is disposed between the first and the second material, the third material forming a common crystalline solid solution with the first material and the second material at the temperature of the high temperature-high pressure metal diffusion process, the solubility of the first material in the crystal of the third material being greater than the direct solubility of the first material in the crystal of the second material and the solubility of the second material in the crystal of the third material being greater than the direct solubility of the second material in the first material.

9. Method of manufacturing a permanent mould as claimed in claim 7 or 8, **characterised in that** an inner body is produced from the second material, the outer contours of which precisely match the inner contours of an outer body fabricated from the first material, that the outer body fabricated from the first material is placed on the inner body fabricated from the second material, that the composite comprising the inner and outer bodies is enclosed and supplied to the high temperature-high pressure metal diffusion and that the final mould contour is worked out from the inner body.

10. Method of manufacturing a permanent mould as claimed in one of claims 7 or 8, **characterised in that** a hollow body is fabricated from the second material, that the hollow body is filled with metal powder of the first material, that a cooling pipe system is disposed, if required, in the interior of the hollow body and that the filled hollow body is supplied to the high temperature-high pressure metal diffusion.

## Revendications

1. Moule permanent (1) pour la coulée des métaux, des plastiques et du verre,
au moins une partie (15) de ce moule permanent étant constituée essentiellement d'une première matière à haute conductivité thermique et
cette partie (15) du moule permanent (1) présentant sur sa surface intérieure façonnante une couche (16) d'une deuxième matière à plus faible conductivité thermique et haute résistance au choc thermique et à l'abrasion, le rapport des conductivités thermiques étant compris entre 5 : 1 et 15 : 1 et l'épaisseur (d, 17', 17") de la couche (16) de la deuxième matière étant fixée en fonction de densités de courant de chaleur différentes localement désirées.

2. Moule permanent selon la revendication 1, **caractérisé par le fait qu'**entre la première matière du moule permanent (1) et la couche (16) de la deuxième matière est placée au moins en partie une mince couche intermédiaire d'une troisième matière, la troisième matière formant à la température d'un processus de diffusion de métal à haute température et haute pression une solution solide à la fois avec la première matière et avec la deuxième.

3. Moule permanent selon la revendication 2, **caractérisé par le fait que** la solubilité de la première matière dans le cristal de la troisième matière est supérieure à la solubilité directe de la première matière dans le cristal de la deuxième matière et la solubilité de la deuxième matière dans le cristal de la troisième matière est supérieure à la solubilité directe de la deuxième matière dans la première.

4. Moule permanent selon l'une des revendications 1 à 3, **caractérisé par le fait que** la première et la deuxième matières sont des matériaux métalliques dont les points de fusion sont supérieurs à 900 °C,
que le rapport des coefficients de dilatation thermique linéaire de la première matière à celui de la deuxième matière est compris entre 1 : 1 et 2,5 : 1, et
qu'entre les deux matières existe une liaison métallique endurante produite par un processus de diffusion de métal à haute température et haute pression.

5. Moule permanent selon l'une des revendications 1 à 4, **caractérisé par le fait que** la première matière est du cuivre ou un alliage de cuivre avec additions d'alliage de jusqu'à 8 % maximum et la deuxième matière est un acier pour travail à chaud.

6. Moule permanent selon l'une des revendications 1 à 5, **caractérisé par le fait qu'**à l'intérieur de la première matière est placé un système de tuyaux (27) pour un circuit de refroidissement et de chauffage.

7. Procédé de fabrication d'un moule permanent pour la coulée des métaux, des plastiques et du verre, dans lequel
on fabrique un corps de base d'une première matière à haute conductivité thermique,
on applique sur les surfaces intérieures façonnantes du corps de base une couche d'une deuxième matière à plus faible conductivité thermique et haute résistance au choc thermique et à l'abrasion, le rapport des conductivités thermiques étant compris entre environ 5 : 1 et 15 : 1, et
on produit entre les deux matières une liaison métallique endurante par un processus de diffusion de métal à haute température et haute pression où l'on règle la température entre 850 °C et 1200 °C et la pression entre 250 bar et 2500 bar.

8. Procédé de fabrication d'un moule permanent selon la revendication 7, **caractérisé par le fait qu'**avant d'appliquer la couche de la deuxième matière, on place une couche mince d'une troisième matière entre la première et la deuxième matières, la troisième matière, à la température du processus de diffusion de métal à haute température et haute pression, formant avec chacune de la première et de la deuxième matières une solution solide commune, la solubilité de la première matière dans le cristal de la troisième matière étant supérieure à la solubilité directe de la première matière dans le cristal de la deuxième matière et la solubilité de la deuxième matière dans le cristal de la troisième matière étant supérieure à la solubilité directe de la deuxième matière dans la première.

9. Procédé de fabrication d'un moule permanent selon l'une des revendications 7 et 8, **caractérisé par le fait**
**qu'**on fabrique en la deuxième matière un corps intérieur dont les contours extérieurs s'ajustent exactement aux contours intérieurs d'un corps extérieur fabriqué en la première matière,
**qu'**on applique le corps extérieur fait de la première matière par-dessus le corps intérieur fait de la deuxième matière,
**qu'**on enveloppe l'ensemble formé du corps extérieur et du corps intérieur et exécute la diffusion de métal à haute température et haute pression, et
**qu'**on réalise le contour final du moule dans le corps intérieur.

10. Procédé de fabrication d'un moule permanent selon l'une des revendications 7 et 8, **caractérisé par le fait**
**qu'**on fabrique un corps creux de la deuxième matière,
**qu'**on remplit ce corps creux de poudre métallique de la première matière,
**qu'**on place au besoin un système de tuyaux de refroidissement à l'intérieur du corps creux, et
**qu'**on soumet le corps creux rempli à la diffusion de métal à haute température et haute pression.
